# EUROPÄISCHE PATENTSCHRIFT

(11) **EP 0 691 383 B1**
(45) Veröffentlichungstag und Bekanntmachung des Hinweises auf die Patenterteilung: **09.09.1998**
(21) Anmeldenummer: 95109785.6
(22) Anmeldetag: 23.06.1995
(51) Int. Cl.: C09B 62/513, C09B 62/09

(54) **Azofarbstoffe mit faserreaktiven Gruppen**
Azodyes with fiber-reactive groups
Colorants azoiques ayant des groupes réactifs avec les fibres

(30) Priorität: 06.07.1994 DE 4423650
(43) Veröffentlichungstag der Anmeldung: 10.01.1996
(73) Patentinhaber: BAYER AG, 51368 Leverkusen (DE)
(72) Erfinder: Jäger, Horst, Dr., D-51375 Leverkusen (DE); Wolff, Joachim, Dr., D-51519 Odenthal (DE)

(56) Entgegenhaltungen:
- EP-A- 0 432 542
- EP-A- 0 567 036
- EP-A- 0 568 816

## Beschreibung

Die Erfindung betrifft neue Azoreaktivfarbstoffe sowie ihre Herstellung und Verwendung.

Azoreaktivfarbstoffe sind bereits aus zahlreichen Veröffentlichungen bekannt, z.B. DE-A-39 40 266, EP-A-581 729, EP-A-559 617 und EP-A-567 036. Die bekannten Farbstoffe weisen aber noch anwendungstechnische Nachteile auf. Die vorliegende Erfindung betrifft Reaktivfarbstoffe der Formel 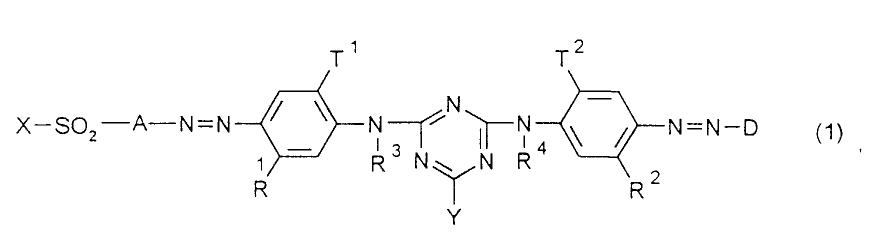 worin
- A: einen gegebenenfalls substituierten Phenylen- oder Naphthylenrest bedeutet,
- R¹ und R²: gleich oder verschieden sind und unabhängig voneinander für Wasserstoff, Methyl, Ethyl, Methoxy, Ethoxy oder NHCOE stehen, worin E = NH₂, CH₃, C₂H₅, n-C₃H₇, iso-C₃H₇, CH₂SO₃H
- T¹ und T²: gleich oder verschieden sind und unabhängig voneinander für Wasserstoff, Methyl, Ethyl, Methoxy oder Ethoxy stehen,
- D: den Rest einer Diazokomponente der Benzol- oder Naphthalinreihe darstellt,
- R³ und R⁴: gleich oder verschieden sind und unabhängig voneinander für Wasserstoff, Methyl oder Ethyl stehen,
- Y: für Fluor, Chlor oder einen gegebenenfalls substituierten Pyridiniumrest steht, und
- X: CH=CH₂ oder CH₂CH₂-Z bedeutet, worin Z einen unter Färbebedingungen abspaltbaren Rest darstellt.

Der Rest D kann eine weitere Reaktivgruppe mit dem Rest SO₂X enthalten. Dementsprechend unterscheidet man zwei verschiedene Reihen von Diazokomponenten, die durch die allgemeine Formel (2) und (3) wiedergegeben werden:

H₂ND¹ (2)

H₂ND²-SO₂X¹ (3),

worin
- D¹: einen reaktivgruppenfreien Phenyl- oder Naphthylrest bedeutet, der gegebenenfalls substituiert ist
- D²: einen gegebenenfalls substituierten Phenylen- oder Naphthylenrest bedeutet,
- X¹: eine der unter X angegebenen Bedeutungen hat.

Beispiele für Substituenten der Reste A und D¹ bzw. D² sind folgende :
Methyl, Ethyl, Methoxy, Ethoxy, Chlor, Carboxy und die Sulfonsäuregruppe.

Für Z seien beispielhaft folgende Reste genannt:
-OSO₃H, -OPO₃H₂, -OCOCH₃, -Cl, -OSO₂CH₃, -S₂O₃H. Bevorzugt steht Z für -OSO₃H.

Substituenten des Pyridiniumrestes Y sind:
Methyl, Ethyl, Carboxy, Carbonamid, Sulfonamid und die Sulfonsäuregruppe. Eine bevorzugte Bedeutung von Y ist Chlor.

Im Rahmen der Formel (1) sind Farbstoffe bevorzugt, in denen
- X: für CH=CH₂ oder CH₂CH₂OSO₃H,
- Y: für Chlor und Fluor, insbesondere für Chlor,
- R¹ und R²: unabhängig voneinander für Methyl, Aminocarbonylamino, Acetylamino oder Propionylamino und
- T¹ und T²: für Wasserstoff stehen.

Weiterhin bevorzugt sind Farbstoffe der Formel (1), in denen der Rest D in der Bedeutung von D¹ für folgende Strukturen steht: 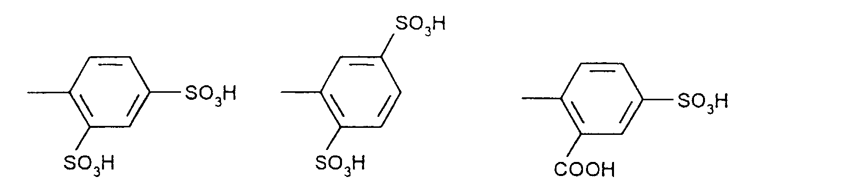 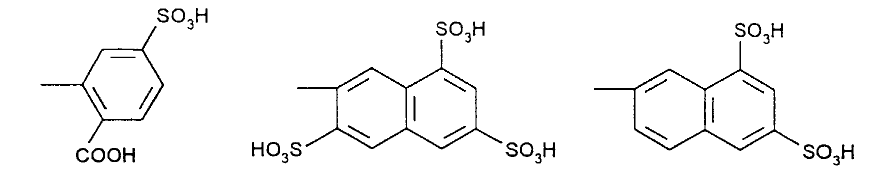 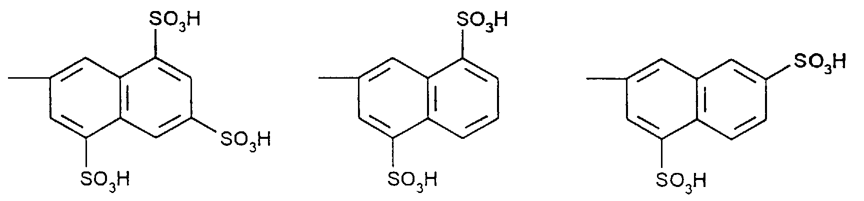 und solche, in denen der Rest D in der Bedeutung von -D²-SO₂X¹ und A-SO₂X unabhängig voneinander für eine der folgenden Strukturen stehen:

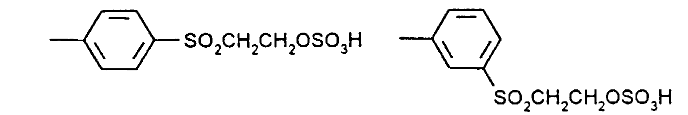

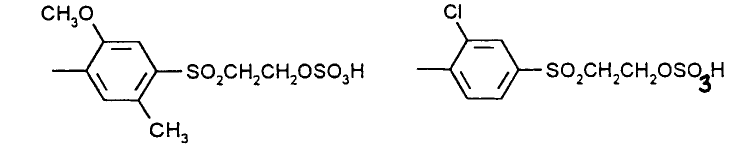

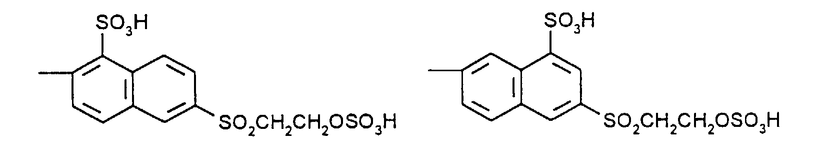

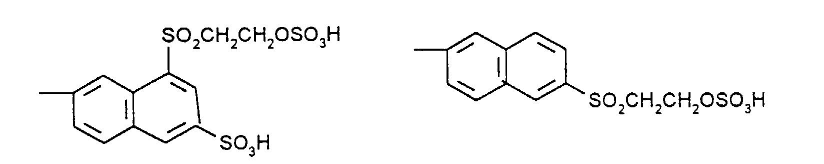

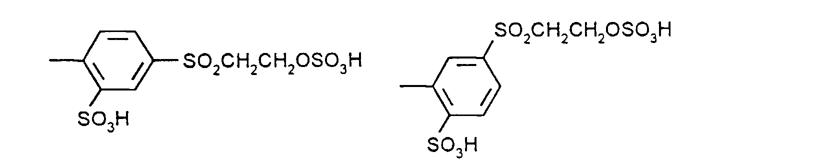

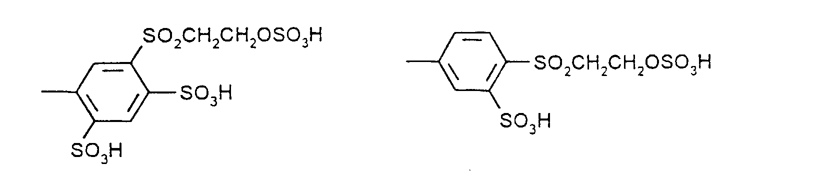

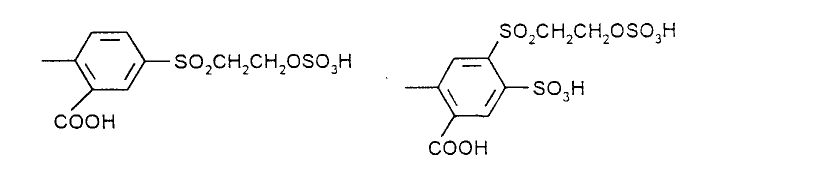

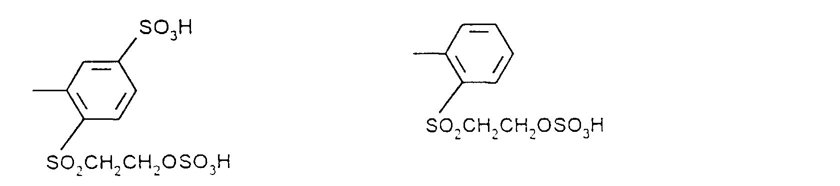

Eine bevorzugte Bedeutung von -A-SO₂X bzw. -D²-SO₂X¹ in Formel (1) ist

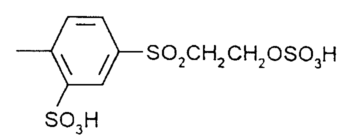

Im Rahmen der Formel (1) sind folgende Farbstoffe 2-4 besonders bevorzugt: 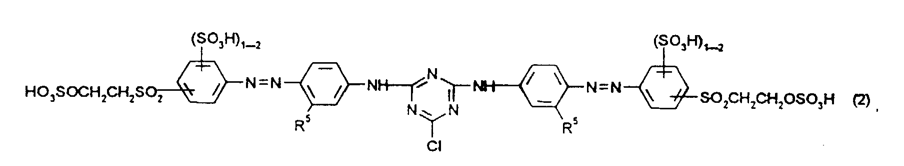 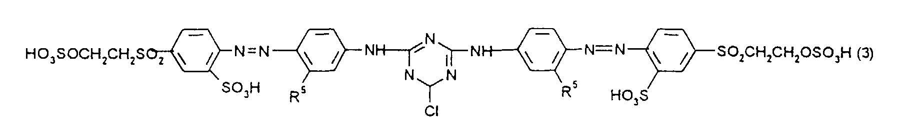 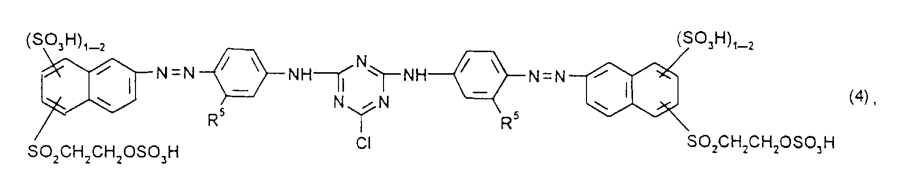 worin
R⁵ = unabhängig voneinander CH₃, NHCOCH₃, NHCONH₂.

Die Reaktionsbedingungen der Herstellung entsprechen den auf dem Gebiet der Acylierung, Diazotierung und Kupplung üblichen Bedingungen. So erfolgt die Herstellung der erfindungsgemäßen Farbstoffzwischenprodukte vorzugsweise im wäßrigen Medium.

So wird ein Monoazofarbstoff der Formel 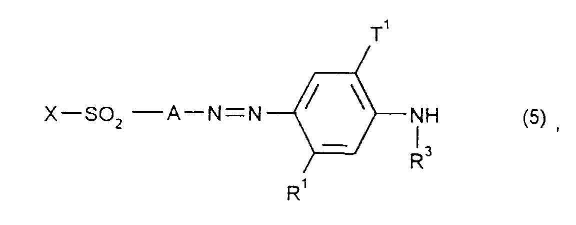 worin A, R¹, T¹ und R³ die angegebene Bedeutung haben,
mit einem Halogentriazin der Formel 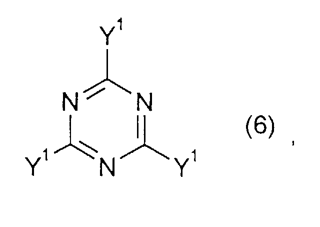 worin
- Y¹: für Chlor oder Fluor steht,
umgesetzt, wobei ein Farbstoff der Formel 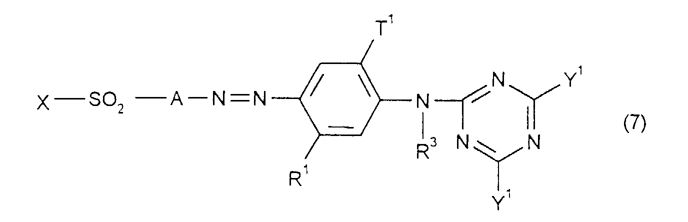 entsteht. Dieser wird dann mit einem Monoazofarbstoff der Formel 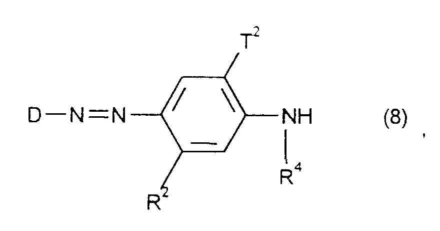 worin
D, R², T² und R⁴ die angegebene Bedeutung haben,
zu einem Farbstoff der Formel (1) mit Y = Chlor oder Fluor kondensiert.

Man kann den Aufbau des Farbstoffes auch in umgekehrter Reihenfolge vornehmen und zunächst einen Monoazofarbstoff (8) mit einem Halogentriazin (6) kondensieren, wobei ein Farbstoff der Formel 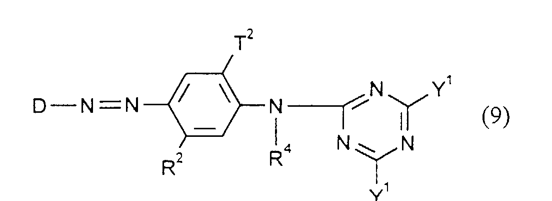 sich bildet. Dieser wird dann mit einem Monoazofarbstoff (5) zu einem Farbstoff der Formel (1) kondensiert.

Für den Fall, daß Y für eine gegebenenfalls substituierte Pyridiniumgruppe steht, kann der Farbstoff der Formel (1), worin Y = Chlor oder Fluor, mit einer Pyridinverbindung der Formel 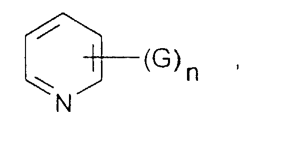 worin
- G: Methyl, Ethyl, Carbonamid, Sulfonsäure oder Sulfonamid bedeutet, und worin n = 0 bis 3, wenn G für Methyl oder Ethyl, und n = 0 bis 1, wenn G für Carboxyl, Carbonamid, Sulfonsäure oder Sulfonamid steht.

Die Umwandlung der Halogensubstituenten Y in einen Pyridiniumsubstituenten wird durch Erhitzen in wäßrigem Medium auf 40 bis 90°C und im pH-Bereich von 3 bis 9, insbesondere 5 bis 7, ausgeführt.

Die Isolierung der nach den vorstehenden beschriebenen Verfahren erhaltenen Reaktivfarbstoffe erfolgt in üblicher Weise durch Aussalzen, beispielsweise mit Natrium- oder Kaliumchlorid, oder durch Eindampfen der neutralen wäßrigen Farbstofflösung, vorzugsweise bei mäßig erhöhter Temperatur und vermindertem Druck, oder durch Sprühtrocknung. Die Farbstoffe können als Feststofformierungen wie auch als konzentrierte Lösungen eingesetzt werden.

In einer bevorzugten Ausführungsform werden die Farbstoffe als Granulate verwendet. Die Granulate der Farbstoffe können in folgenden Schritten erhalten werden:

### Mischgranulierung

Dabei wird das Farbstoffpulver mit 15 bis 55 % Wasser - bezogen auf das Gemisch des Pulvers - befeuchtet, anschließend in einem Mischgranulator das Gemisch geformt und dann getrocknet und entstaubt, wobei das Entstaubungsmittel als Aerosolgemisch auf das Granulat gesprüht wird.

### Sprühgranulierung

Dabei wird die Syntheselösung oder -suspension in einem fluidisierenden Sprühtrockner gleichzeitig getrocknet und granuliert.

Farbstoffpulver oder Farbstoffgranulate enthalten im allgemeinen (in Gew.-%) 30 bis 80 % eines Reaktivfarbstoffes der Formel (1), 5 bis 15 % Wasser, jeweils bezogen auf die Gesamtzusammensetzung. Daneben können sie noch anorganische Salze wie Alkalichloride oder Alkalisulfate, Dispergiermittel und Entstaubungsmittel enthalten.

Bevorzugte Feststoffmischungen enthalten zusätzlich Puffersubstanzen, die beim Auflösen in der 20-fachen Menge Wasser (bezogen auf das Gewicht der Farbstoffformierung) einen pH-Wert von 3,5 bis 7,5, insbesondere 4,5 bis 6,5 geben. Diese Puffermischungen werden in Mengen von 3 bis 50, insbesondere 5 bis 15 Gew.-%, bezogen auf das Gesamtgewicht, zugesetzt.

Wäßrige Reaktivfarbstofflösungen enthalten im allgemeinen 5 bis 50 % eines Farbstoffs der Formel (1) (bezogen auf das Gesamtgewicht der Lösung).

Bevorzugte wäßrige Reaktivfarbstofflösungen enthalten zusätzlich Puffersubstanzen und weisen einen pH-Wert von 3,5 bis 7,5, insbesondere 4,5 bis 6,5 auf. Diese Puffersubstanzen werden vorzugsweise in Mengen von 0,1 bis 50 %, insbesondere 1 bis 20 Gew.-%, bezogen auf das Gesamtgewicht, zugesetzt.

Die verwendeten Puffer sind inert gegenüber den Reaktivgruppen. Beispiele für Puffer sind: Natriumdihydrogenphosphat, Dinatriumhydrogenphosphat, Kaliumdihydrogenphosphat, Dikaliumhydrogenphosphat, Natriumacetat, Kaliumacetat, Natriumborat, Kaliumborat, Natriumoxalat, Kaliumoxalat und Natriumhydrogenphthalat. Diese Puffer können für sich allein oder in Mischung verwendet werden.

Die Azoverbindungen (1) besitzen wertvolle Farbstoffeigenschaften. Infolge der faserreaktiven Gruppe SO₂X und des Halogentriazinyl-Restes weisen sie faserreaktive Eigenschaften auf.

Die Reaktivfarbstoffe der Formel (1) ergeben Färbungen mit guten Naß- und Lichtechtheiten. Besonders hervorzuheben ist es, daß die Farbstoffe eine gute Löslichkeit und Elektrolytlöslichkeit bei guten Auszieheigenschaften und hoher Farbstoff-Fixierung aufweisen, und daß sich die nicht fixierten Anteile leicht entfernen lassen.

Die neuen Farbstoffe der Formel (1) eignen sich zum Färben und Bedrucken von Hydroxy- oder Amidgruppen enthaltenen Materialien, wie Textilfaser-, Fäden und Geweben aus Wolle, Seide, synthetischen Polyamid- und Polyurethanfasern und zum waschechten Färben und Bedrucken von nativer oder regenerierter Cellulose, wobei die Behandlung von Cellulosematerialien zweckmäßigerweise in Gegenwart säurebindender Mittel und gegebenenfalls durch Hitzeeinwirkung nach den für Reaktivfarbstoffe bekannt gewordenen Verfahren erfolgt.

Die angegebenen Formeln sind die der entsprechenden freien Säuren. Die Farbstoffe wurden im allgemeinen in Form von Alkalisalzen, insbesondere der Na-Salze isoliert und zum Färben eingesetzt.

### Beispiel 1

### a) Diazotierung

36,1 g 4-(β-Sulfatoethylsulfonyl)-anilin-2-sulfonsäure werden in 500 ml Eiswasser mit 28 ml 30%iger Salzsäure versetzt. Man gibt dann tropfenweise 70 ml 10%ige Natriumnitritlösung zu und rührt solange nach bis nur noch ein geringer Überschuß an Nitrit zu erkennen ist. Dieser wird dann mit Amidosulfonsäure zerstört.

### b) Kupplung

13,5 g 3-Aminophenylharnstoff werden in 400 ml Wasser neutral in der Wärme gelöst. Diese Lösung gibt man zu der nach a) erhaltenen Lösung der Diazotierung und stellt dann den pH der Mischung durch Einwerfen von Natriumhydrogencarbonat auf 3 bis 4 ein und rührt solange bis die Kupplung beendet ist.

### c) Kondensation

Die nach a) erhaltene Lösung des Monoazofarbstoffs der Formel 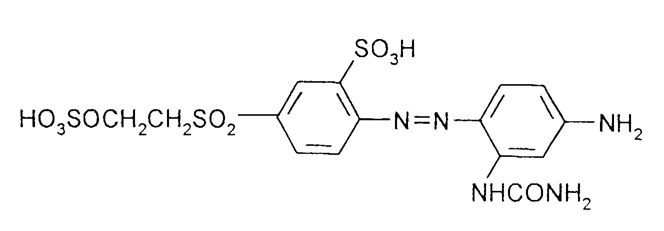 wird auf 5 bis 8°C abgekühlt und mit 9,5 g Cyanurchlorid versetzt. Dabei wird der pH durch Zugabe von Natriumhydrogencarbonat bei pH 5,0 bis 5,5 gehalten. Man rührt solange bis kein Hydrogencarbonat mehr verbraucht wird. Es sind dann ca. 50 % des eingesetzten Monoazofarbstoffs acyliert. Anschließend erhöht man die Temperatur auf 40 bis 50°C und hält den pH durch weitere Zugabe von Natriumhydrogencarbonat im Bereich von 5 bis 6. Nach beendeter Kondensation wird der Farbstoff aus der klaren Lösung mit Kaliumchlorid ausgesalzen, abgesaugt, bei 70°C im Umlufttrockenschrank getrocknet und gemahlen. Man erhält ein orangefarbenes Pulver, das sich leicht in Wasser mit gelber Farbe löst.

Der Farbstoff entspricht folgender Formel 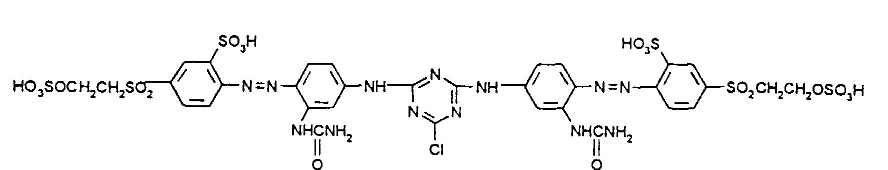 λₘₐₓ 400 nm

Nach einem der für Reaktivfarbstoffe mit diesen Reaktivgruppen üblichen Färbeverfahren erhält man damit auf Baumwolle klare rotstichige gelbe Färbungen.

Verfährt man nach den Angaben dieses Beispiels, verwendet jedoch für Stufe a die in Spalte 2 genannten Diazokomponenten und für Stufe b die in Spalte 3 aufgeführten Kupplungskomponenten, so resultieren gleichfalls wertvolle Farbstoffe, die Baumwolle rotstichig gelb färben.

| Beispiel | Diazokomponente | Kupplungskomponente |
|---|---|---|
| 2 | 4-(β-Sulfatoethylsulfonyl)-anilin-2-sulfonsäure | m-Toluidin |
| 3 | 4-(β-Sulfatoethylsulfonyl)-anilin-2-sulfonsäure | 3-Aminoacetanilid |
| 4 | 4-(β-Sulfatoethylsulfonyl)-anilin-2-sulfonsäure | 3-Propionylaminoanilin |
| 5 | 5-(β-Sulfatoethylsulfonyl)-anilin-2-sulfonsäure | m-Toluidin |
| 6 | 5-(β-Sulfatoethylsulfonyl)-anilin-2-sulfonsäure | 3-Aminophenylharnstoff |
| 7 | 5-(β-Sulfatoethylsulfonyl)-anilin-2-sulfonsäure | 3-Aminoacetanilid |
| 8 | 5-(β-Sulfatoethylsulfonyl)-anilin-2,4-disulfonsäure | m-Toluidin |
| 9 | 5-(β-Sulfatoethylsulfonyl)-anilin-2,4-disulfonsäure | 3-Aminophenylharnstoff |
| 10 | 5-(β-Sulfatoethylsulfonyl)-anilin-2,4-disulfonsäure | 3-Aminoacetanilid |
| 11 | 8-(β-Sulfatoethylsulfonyl)-naphthalin-6-sulfonsäure | m-Toluidin |
| 12 | 8-(β-Sulfatoethylsulfonyl)-naphthalin-6-sulfonsäure | 3-Aminophenylharnstoff |
| 13 | 8-(β-Sulfatoethylsulfonyl)-naphthalin-6-sulfonsäure | 3-Aminoacetanilid |
| 14 | 6-(β-Sulfatoethylsulfonyl)-naphthalin-8-sulfonsäure | m-Toluidin |
| 15 | 6-(β-Sulfatoethylsulfonyl)-naphthalin-8-sulfonsäure | 3-Aminophenylharnstoff |
| 16 | 6-(β-Sulfatoethylsulfonyl)-naphthalin-8-sulfonsäure | 3-Aminoacetanilid |

Der λₘₐₓ-Wert für umgesetzte Farbstoffe beträgt

| Beispiel | nm |
|---|---|
| 2 | 400 |
| 3 | 400 |

### Beispiele 17 - 23

Verfährt man für die Stufen a) und b) nach den Angaben von Beispiel 1, setzt aber anstelle von 9,5 g Cyanurchlorid 19 g ein, führt die Kondensation zum Dichlortriazinfarbstoff in der beschrieben Weise aus, setzt für den Austausch des zweiten Chloratomes 0,09 mol der nachfolgend aufgeführten Monoazofarbstoffe ein und isoliert die Farbstoffe durch Aussalzen, Absaugen, Trocknen und Mahlen, so erhält man gleichfalls wertvolle Reaktivfarbstoffe, die Baumwolle in rotstichig gelben Tönen färben.

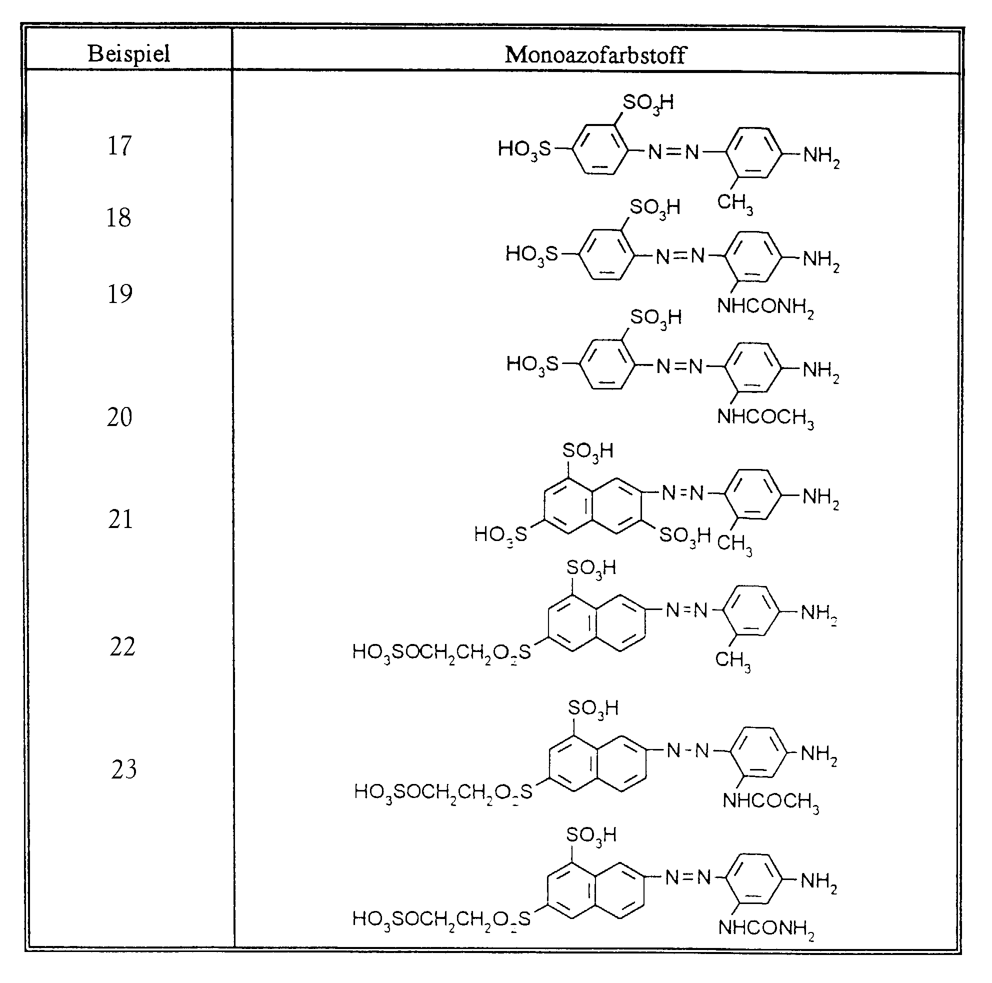

### Beispiel 24

Verfährt man für die Stufe a) und b) nach den Angaben von Beispiel 1, setzt aber in der Kondensationsstufe anstelle von 9,5 g Cyanurchlorid 7 g Trifluortriazin ein, wobei man die Acylierung bei 0°C und im pH-Bereich von 5 bis 6 ausführt, der durch Zutropfen von verdünnter Natronlauge eingehalten wird, erwärmt anschließend für den Austausch des zweiten Fluoratoms auf 20°C, wobei man gleichfalls den pH durch Zutropfen von verdünnter Natronlauge einhält, so resultiert eine klare gelbe Lösung, aus der der Farbstoff durch Aussalzen, Absaugen, Trocknen und Mahlen in Form eines gelbstichig roten Pulvers gewonnen wird. Der Farbstoff löst sich leicht in Wasser mit gelber Farbe und färbt Baumwolle nach einem der für Reaktivfarbstoffe mit diesen Reaktivgruppen üblichen Färbeverfahren in klaren rotstichig gelben Tönen. Der Farbstoff entspricht folgender Formel

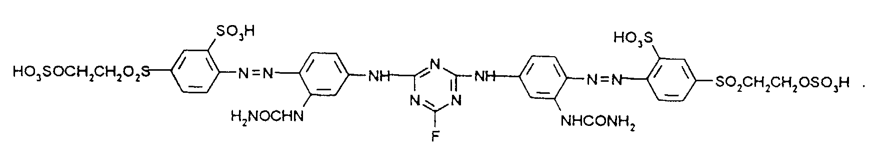

### Beispiele 25 bis 39

Nach den Angaben von Beispiel 24 erhält man weitere wertvolle Reaktivfarbstoffe, die Baumwolle rotstichig gelb färben, wenn man die in Beispielen 2 bis 16 verwendeten Aminomonoazofarbstoffe einsetzt.

### Beispiel 40

Die Lösung des nach Beispiel 1 erhaltenen Farbstoffs wird mit 14 g Pyridin-3-carbonsäure versetzt und 5 Stunden auf 90°C bei pH 5 bis 6 erwärmt. Nach dem Austausch des Chloratoms durch den Pyridiniumrest wird der Farbstoff mit Kaliumchlorid ausgesalzen, abgesaugt, getrocknet und gemahlen. Man erhält ein orangefarbenes Farbstoffpulver, das sich leicht in Wasser mit gelber Farbe löst. Nach einem der für Baumwollreaktivfarbstoffe üblichem Färbeverfahren erhält man auf Baumwolle rotstichig gelbe Färbungen. Der Farbstoff entspricht nachfolgender Formel

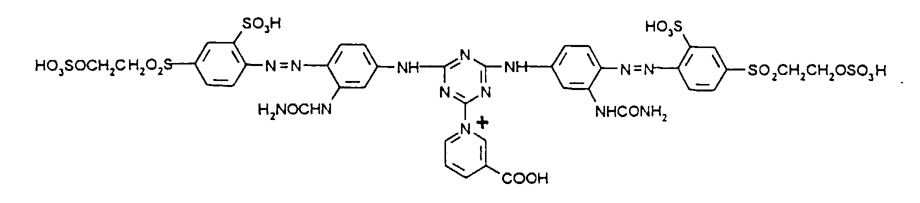

## Patentansprüche

1. Reaktivfarbstoff der Formel 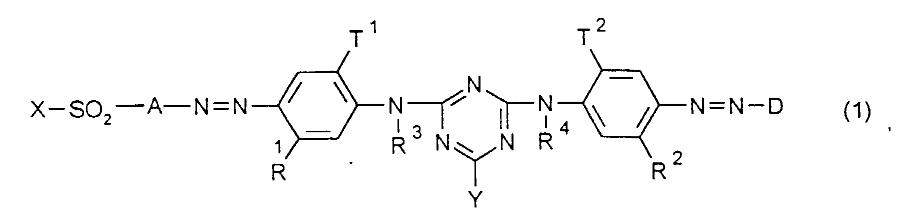 worin
A einen gegebenenfalls substituierten Phenylen- oder Naphthylenrest bedeutet,
R¹ und R² gleich oder verschieden sind und unabhängig voneinander für Wasserstoff, Methyl, Ethyl, Methoxy, Ethoxy oder NHCOE stehen, worin E = NH₂, CH₃, C₂H₅, n-C₃H₇, iso-C₃H₇, CH₂SO₃H
T¹ und T² gleich oder verschieden sind und unabhängig voneinander für Wasserstoff, Methyl, Ethyl, Methoxy oder Ethoxy stehen,
D den Rest einer Diazokomponente der Benzol- oder Naphthalinreihe darstellt,
R³ und R⁴ gleich oder verschieden sind und unabhängig voneinander für Wasserstoff, Methyl oder Ethyl oder stehen,
Y für Fluor, Chlor oder einen gegebenenfalls substituierten Pyridiniumrest steht, und
X CH=CH₂ oder CH₂CH₂-Z bedeutet, worin Z einen unter Färbebedingungen abspaltbaren Rest darstellt.

2. Reaktivfarbstoff gemäß Anspruch 1, dadurch gekennzeichnet, daß der Rest D einen Rest SO₂X enthält, worin
X CH=CH₂ oder CH₂CH₂-Z bedeutet, worin Z einen unter Färbebedingungen abspaltbaren Rest darstellt.

3. Reaktivfarbstoff gemäß wenigstens einem der vorhergehenden Ansprüche, dadurch gekennzeichnet, daß die Reste A und D unsubstituiert sind oder substituiert sind mit Methyl, Ethyl, Methoxy, Ethoxy, Chlor, Carboxy oder wenigstens einer Sulfonylgruppe.

4. Reaktivfarbstoff gemäß wenigstens einem der vorhergehenden Ansprüche, dadurch gekennzeichnet, daß
Z-OSO₃H, -OPO₃H₂, -OCOCH₃, -Cl, -OSO₂CH₃, -S₂O₃H bedeutet,
unabhängig voneinander bei mehrmaligem Auftreten.

5. Reaktivfarbstoff gemäß wenigstens einem der vorhergehenden Ansprüche, dadurch gekennzeichnet, daß D bedeutet

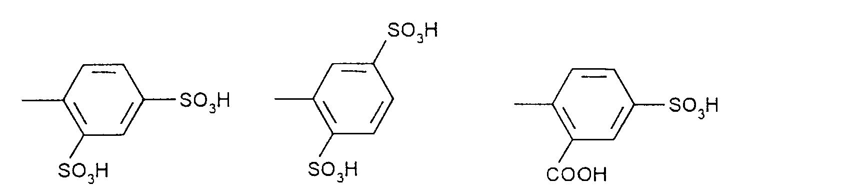

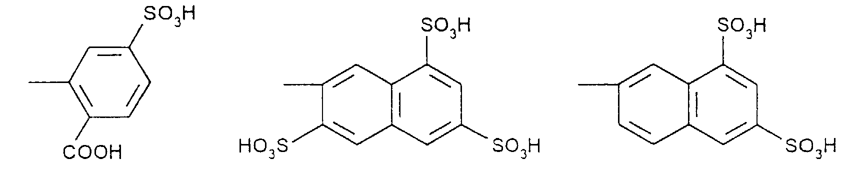

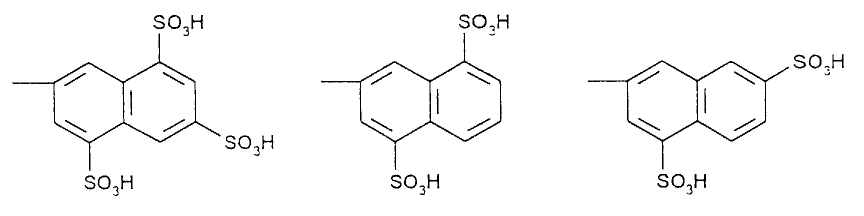

6. Reaktivfarbstoff gemäß wenigstens einem der vorhergehenden Ansprüche, dadurch gekennzeichnet, daß D und der Rest A-SO₂X unabhängig voneinander eine der folgenden Bedeutungen haben:

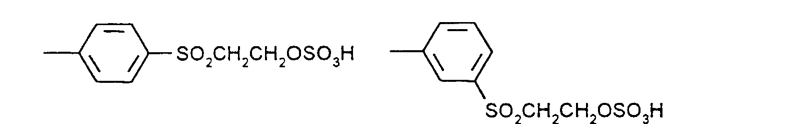

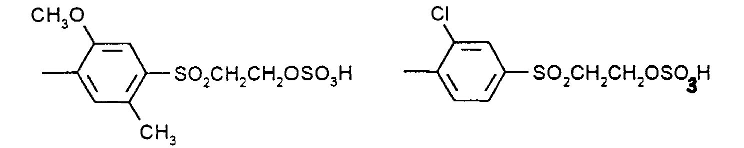

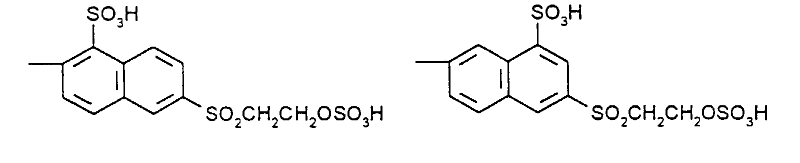

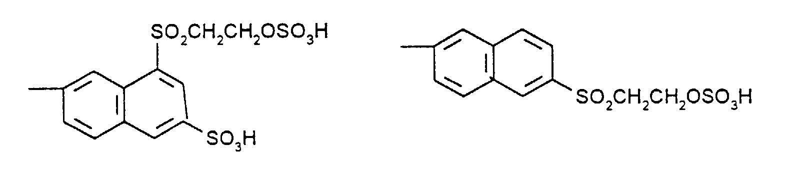

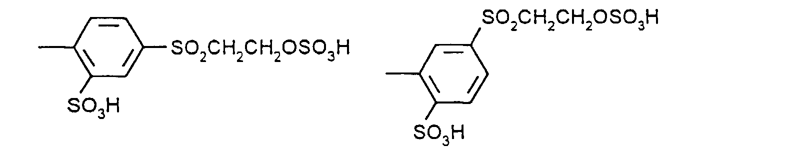

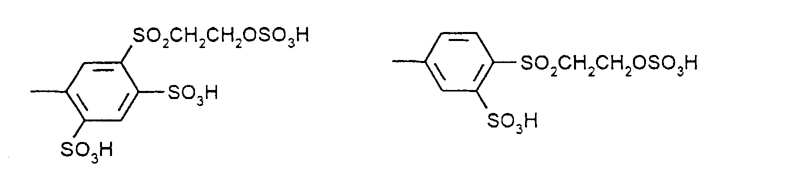

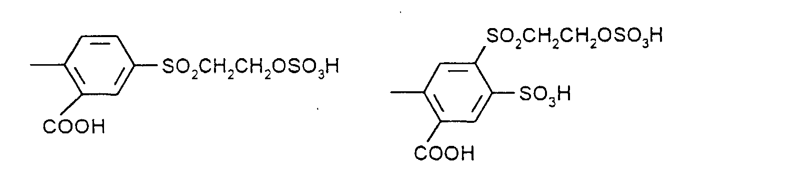

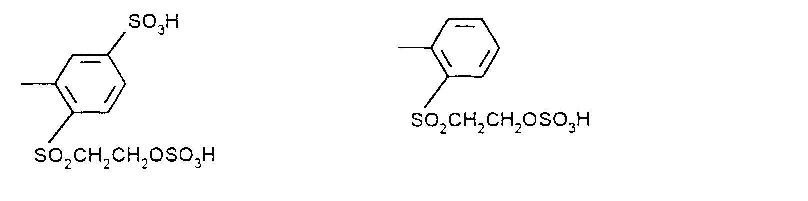

7. Reaktivfarbstoff gemäß wenigstens einem der vorhergehenden Ansprüche, dadurch gekennzeichnet, daß er einer der folgenden Strukturen (2), (3) oder (4) entspricht: 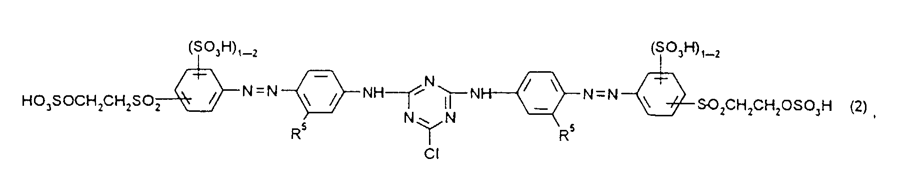 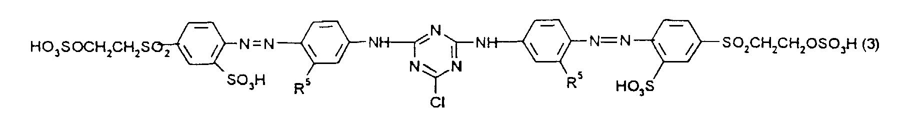 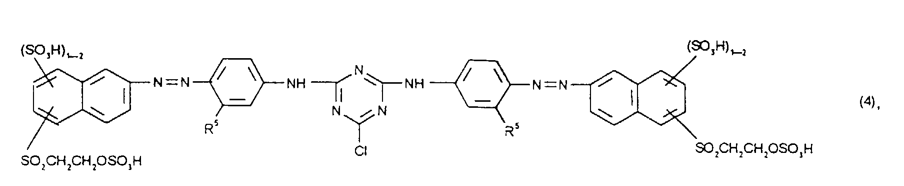 worin die Substituenten R⁵ unabhängig voneinander CH₃, NHCOCH₃, NHCONH₂ bedeuten.

8. Verfahren zum Färben oder Bedrucken von Hydroxyl- oder Amidgruppen enthaltenden Materialien mit einem Reaktivfarbstoff, wobei das Material mit einem Farbstoff gemäß Anspruch 1 gefärbt oder bedruckt wird.

9. Gefärbte Materialien, insbesondere auf Basis Cellulose oder Polyamid, die mit einem Farbstoff gemäß Anspruch 1 gefärbt oder bedruckt worden sind.

## Claims

1. Reactive dye of the formula 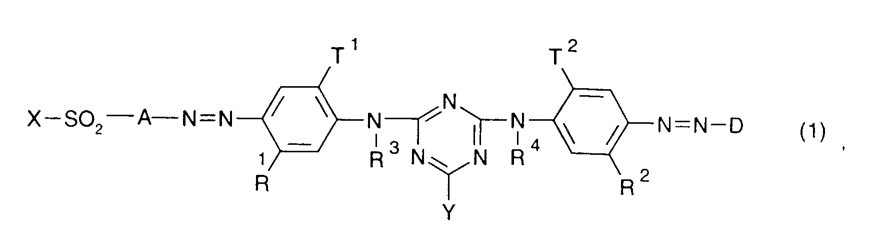 in which
A denotes an optionally substituted phenylene or naphthylene radical,
R¹ and R² are identical or different and independently of one another represent hydrogen, methyl, ethyl, methoxy, ethoxy or NHCOE, in which E = NH₂, CH₃, C₂H₅, n-C₃H₇, iso-C₃H₇ or CH₂SO₃H
T¹ and T² are identical or different and independently of one another represent hydrogen, methyl, ethyl, methoxy or ethoxy,
D denotes the radical of a diazo component of the benzene or naphthalene series,
R³ and R⁴ are identical or different and independently of one another represent hydrogen, methyl or ethyl,
Y represents fluorine, chlorine or an optionally substituted pyridinium radical, and
X denotes CH=CH₂ or CH₂CH₂-Z, in which Z denotes a radical which can be eliminated under dyeing conditions.

2. Reactive dye according to Claim 1, characterized in that the radical D comprises a radical SO₂X in which
X denotes CH=CH₂ or CH₂CH₂-Z, in which Z denotes a radical which can be eliminated under dyeing conditions.

3. Reactive dye according to at least one of the preceding claims, characterized in that the radicals A and D are unsubstituted or are substituted with methyl, ethyl, methoxy, ethoxy, chlorine, carboxyl or with at least one sulphonyl group.

4. Reactive dye according to at least one of the preceding claims, characterized in that
Z denotes -OSO₃H, -OPO₃H₂, -OCOCH₃, -Cl, -OSO₂CH₃ or -S₂O₃H,
independently at each occurrence when it occurs more than once.

5. Reactive dye according to at least one of the preceding claims, characterized in that D denotes

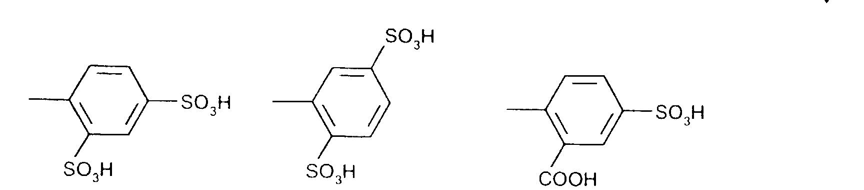

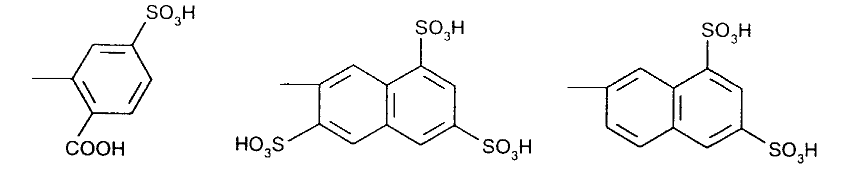

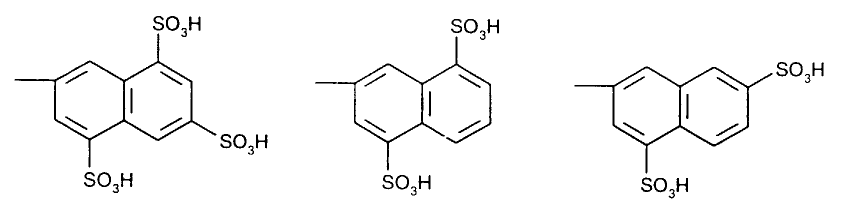

6. Reactive dye according to at least one of the preceding claims, characterized in that D and the radical A-SO₂X independently of one another have one of the following definitions:

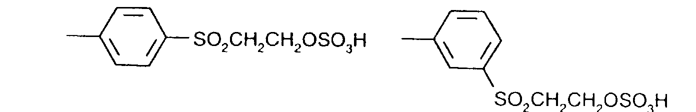

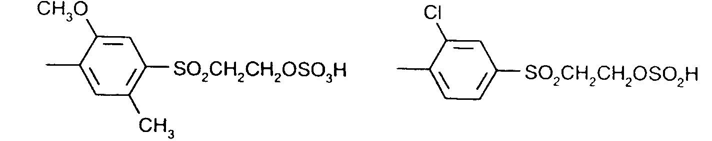

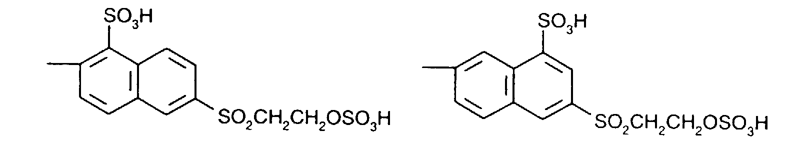

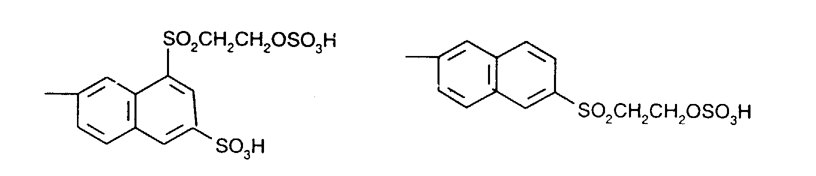

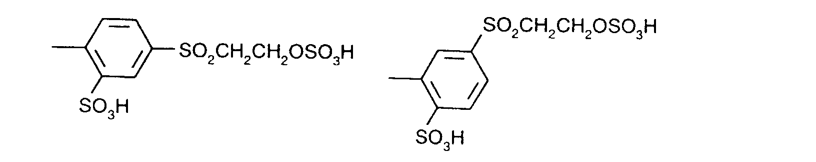

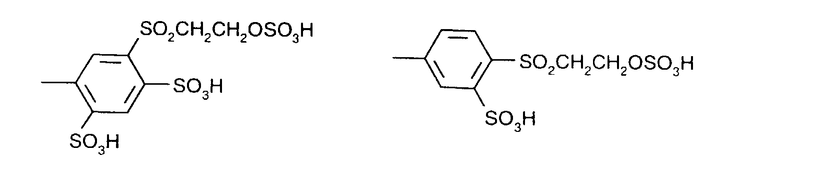

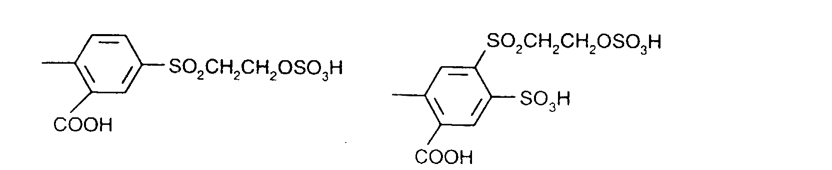

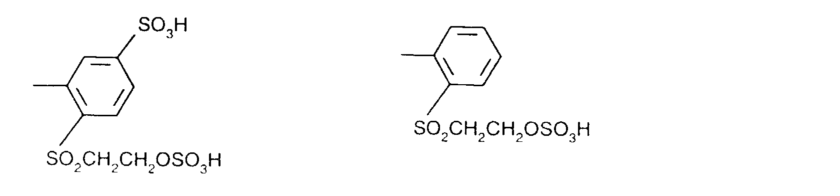

7. Reactive dye according to at least one of the preceding claims, characterized in that it corresponds to one of the following structures (2), (3) or (4): 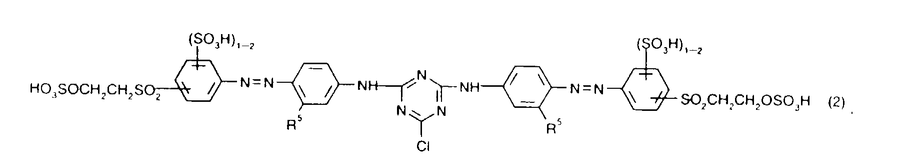 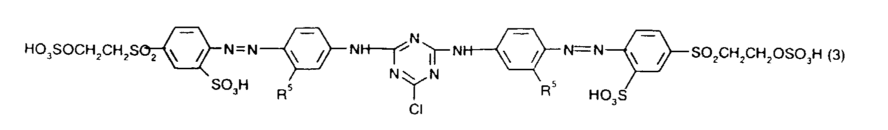 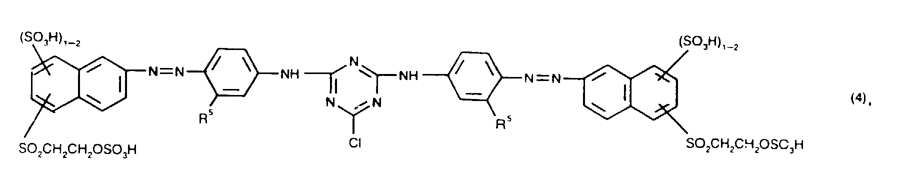 in which the substituents R⁵ independently of one another denote CH₃, NHCOCH₃, NHCONH₂.

8. Process for the dyeing or printing of materials comprising hydroxyl or amide groups with a reactive dye, in which the material is dyed or printed with a dye according to Claim 1.

9. Dyed material, based in particular on cellulose or polyamide, which has been dyed or printed with a dye according to Claim 1.

## Revendications

1. Colorant réactif de formule 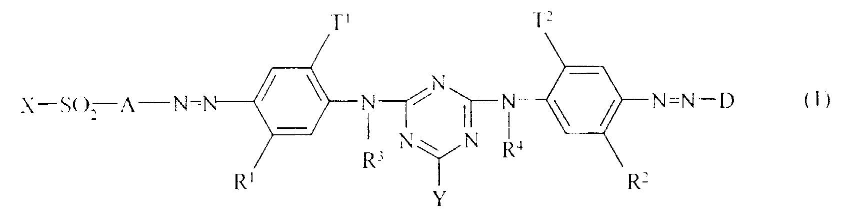 dans laquelle
A représente un radical phénylène ou naphtylène éventuellement substitué,
R¹ et R², ayant des significations identiques ou différentes, représentent chacun, indépendamment l'un de l'autre, l'hydrogène, un groupe méthyle, éthyle, méthoxy, éthoxy ou NHCOE dans lequel E = NH₂, CH₃, C₂H₅, n-C₃H₇, iso-C₃H₇, CH₂SO₃H,
T¹ et T², ayant des significations identiques ou différentes, représentent chacun, indépendamment l'un de l'autre, l'hydrogène, un groupe méthyle, éthyle, méthoxy ou éthoxy,
D représente le radical d'un composant diazotable de la série benzénique ou naphtalénique,
R³ et R⁴, ayant des significations identiques ou différentes, représentent chacun, indépendamment l'un de l'autre, l'hydrogène, un groupe méthyle ou éthyle,
Y représente le fluor, le chlore ou un radical pyridinium éventuellement substitué et
X représente CH = CH₂ ou CH₂CH₂-Z, Z représentant un substituant éliminable dans les conditions de la teinture.

2. Colorant réactif selon la revendication 1, caractérisé en ce que le radical D contient un groupe SO₂X dans lequel
X représente CH = CH₂ ou CH₂CH₂-Z, Z représentant un substituant éliminable dans les conditions de la teinture.

3. Colorant réactif selon au moins une des revendications qui précèdent, caractérisé en ce que les radicaux A et D sont non substitués ou portent des substituants méthyle, éthyle, méthoxy, éthoxy, chloro, carboxy ou au moins un groupe sulfonyle.

4. Colorant réactif selon au moins une des revendications qui précèdent, caractérisé en ce que
Z représente -OSO₃H, -OPO₃H₂, -OCOCH₃, -Cl, -OSO₂CH₃, -S₂O₃H,
avec des significations indépendantes les unes des autres lorsque ce substituant apparaît plusieurs fois.

5. Colorant réactif selon au moins une des revendications qui précèdent, caractérisé en ce que D représente

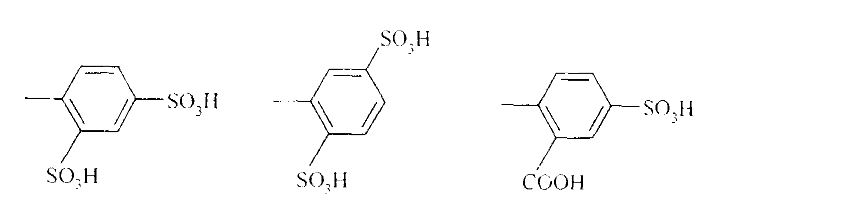

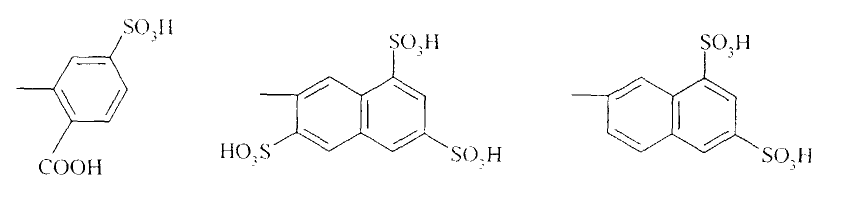

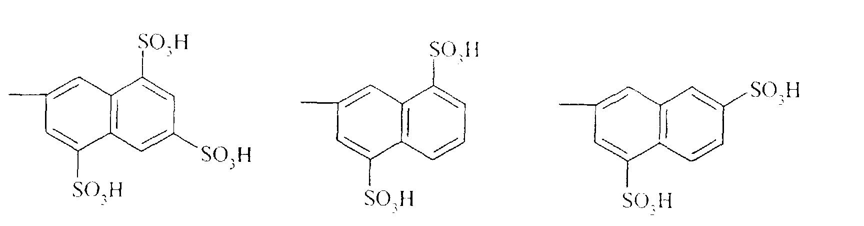

6. Colorant réactif selon au moins une des revendications qui précèdent, caractérisé en ce que D et A-SO₂X, indépendamment l'un de l'autre, représentent l'une des structures suivantes :

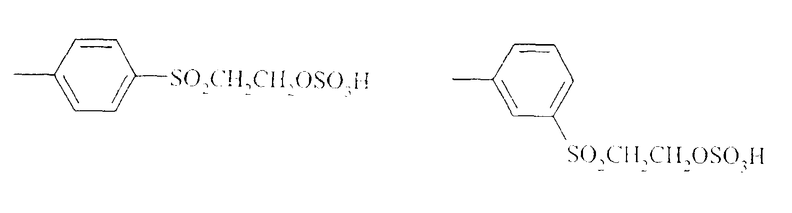

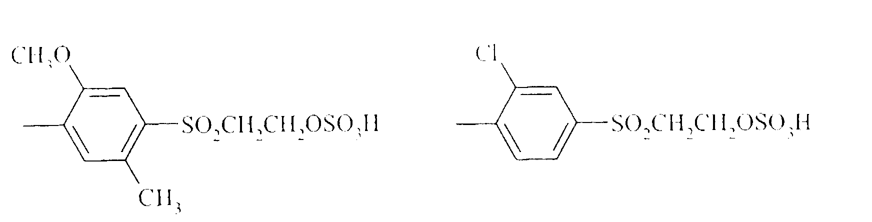

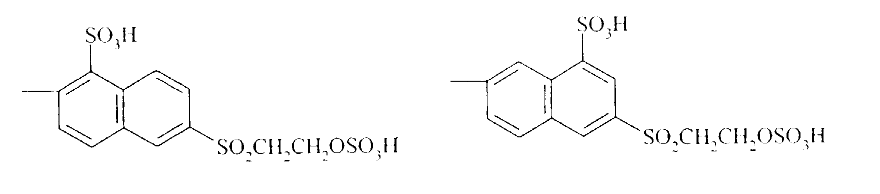

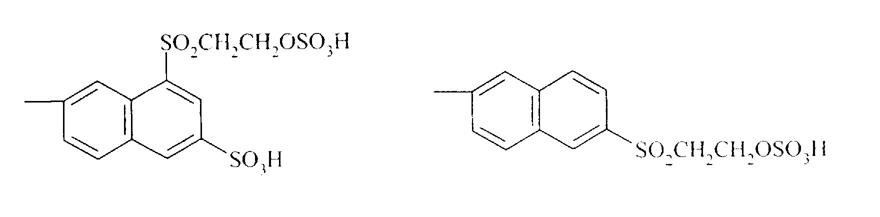

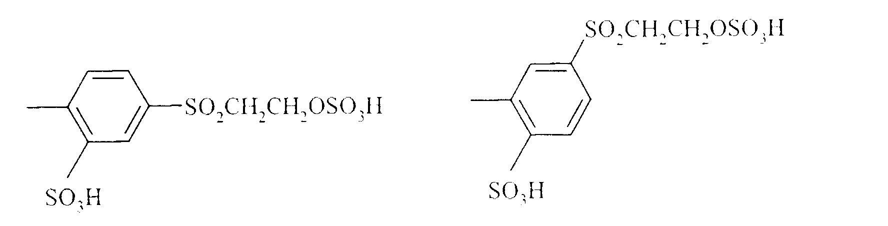

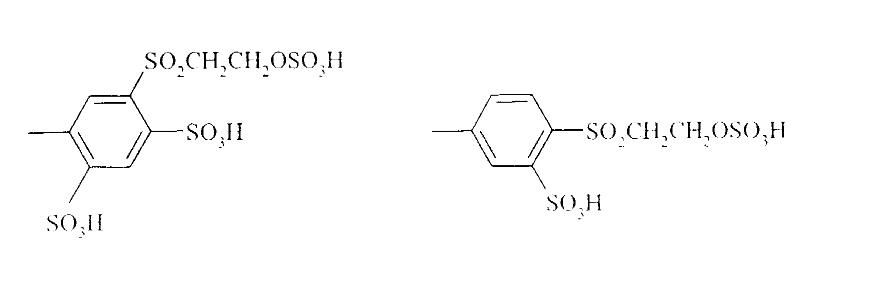

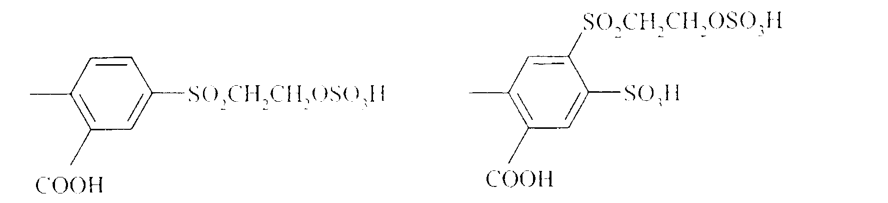

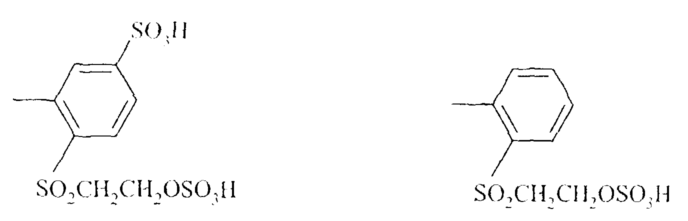

7. Colorant réactif selon au moins une des revendications qui précèdent, caractérisé en ce qu'il a l'une des structures 2, 3 ou 4 ci-après : 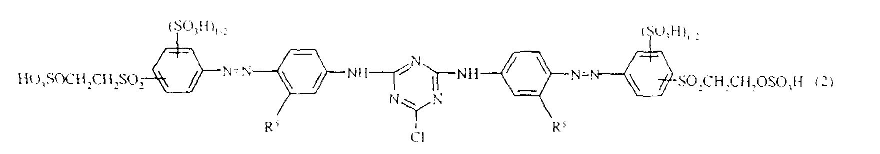 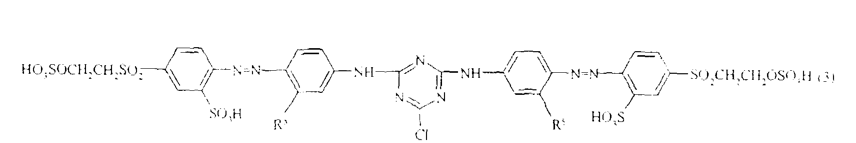 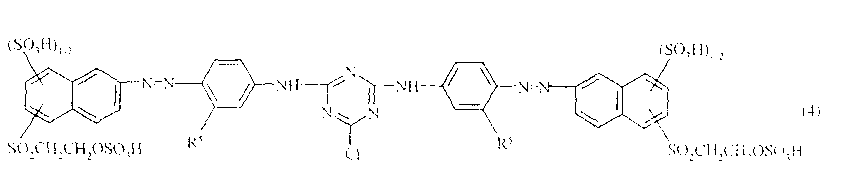 dans lesquelles
les symboles R⁵, représentent chacun, indépendamment les un des autres, CH₃, NHCOCH₃, NHCONH₂.

8. Procédé pour la teinture et l'impression de matières contenant des groupes hydroxy ou amide à l'aide d'un colorant réactif, dans lequel la matière est teinte ou imprimée à l'aide d'un colorant selon la revendication 1.

9. Matières teintes, en particulier à base de cellulose ou de polyamide, qui ont été teintes ou imprimées par un colorant selon la revendication 1.
